# FASCICULE DE BREVET EUROPEEN

(11) **EP 2 138 285 B1**
(45) Date de publication et mention de la délivrance du brevet: **03.10.2012**
(21) Numéro de dépôt: 09305491.4
(22) Date de dépôt: 28.05.2009
(51) Int. Cl.: B26D 3/28, A21C 15/00, A21D 15/00, A47J 43/00, B26D 1/36

(54) **Procédé de fabrication de pain de mie sans croûte**
Verfahren zur Toastbrotherstellung ohne Rinde
Method for manufacturing sandwich bread with no crust

(30) Priorité: 27.06.2008 FR 0854313
(43) Date de publication de la demande: 30.12.2009
(73) Titulaire: Barilla France, 75007 Paris (FR)
(72) Inventeur: Du Réau de la Gaignonnière, Enguerran, 36130 Deols (FR); Nadaud, Francis, 36100 Brives (FR)
(74) Mandataire: Ferreccio, Rinaldo

(56) Documents cités:
- ES-A1- 2 246 671
- JP-A- 2000 245 334
- US-A1- 2004 156 966

## Description

La présente invention concerne un procédé de fabrication de pain de mie sans croûte de formes variées.

De manière classique, un pain de mie sans croûte est obtenu par réalisation des étapes successives suivantes :
- Pétrissage d'une pâte à pain de mie : cette opération consiste à mélanger les ingrédients de la recette pour leur donner une consistance propre à être travaillée mécaniquement d'une part, et à permettre la fermentation panaire d'autre part. Cette étape peut être réalisée selon différents procédés connus ;
- Façonnage d'un pain de mie : cette opération consiste à donner à une quantité de pâte déterminée la forme et la capacité de développement nécessaire, sous l'action de la fermentation ;
- Mise en moule de la quenelle de pâte ainsi façonnée ;
- Fermentation en moule en chambre de pousse à une température d'environ 30 à 50°C et une hygrométrie d'environ 50 à 95% ;
- Cuisson en moule à une température d'environ 100 à 250°C pendant environ 5 à 60mn, par chauffage traditionnel, vapeur, Micro-ondes ou hyper fréquence ;
- Refroidissement du pain : cette opération se fait à une ambiance d'environ 45-55% d'hygrométrie, à une température pouvant varier de 15 à 35°C. La durée de cette opération est variable, avec l'objectif d'atteindre une température à coeur d'environ 15 à 45°C ;
- Parage du pain pour retirer croûte selon diverses techniques ;
- Tranchage du pain : l'épaisseur de chaque tranche finale est généralement d'environ 9 à 15 mm. Lors de cette opération, il est possible de séparer les deux tranches situées aux extrémités du pain (les talons) ou les conserver et les emballer avec le reste du pain ;
- Mise en sac du pain ; et
- Fermeture du sachet, soit pas un clip métallique ou plastique, soit par adhésif ou soudage. Un tel procédé est connu du brevet US 2004/01569606 A1.

Cependant, ce procédé ne donne pas satisfaction car la forme finale du pain de mie, et donc des tranches, est toujours sensiblement la même. En effet, celle-ci est induite par la forme du ou des moules utilisés et par l'opération de parage. Changer la forme globale du pain de mie reviendraient à changer de moule dans la chaîne de fabrication ou les outils de parage. Or cela semble inconcevable si l'on souhaite obtenir une multitude de formes différentes.

Un but de la présente invention est donc de résoudre les problèmes cités précédemment à l'aide d'un procédé selon la revendication 1.

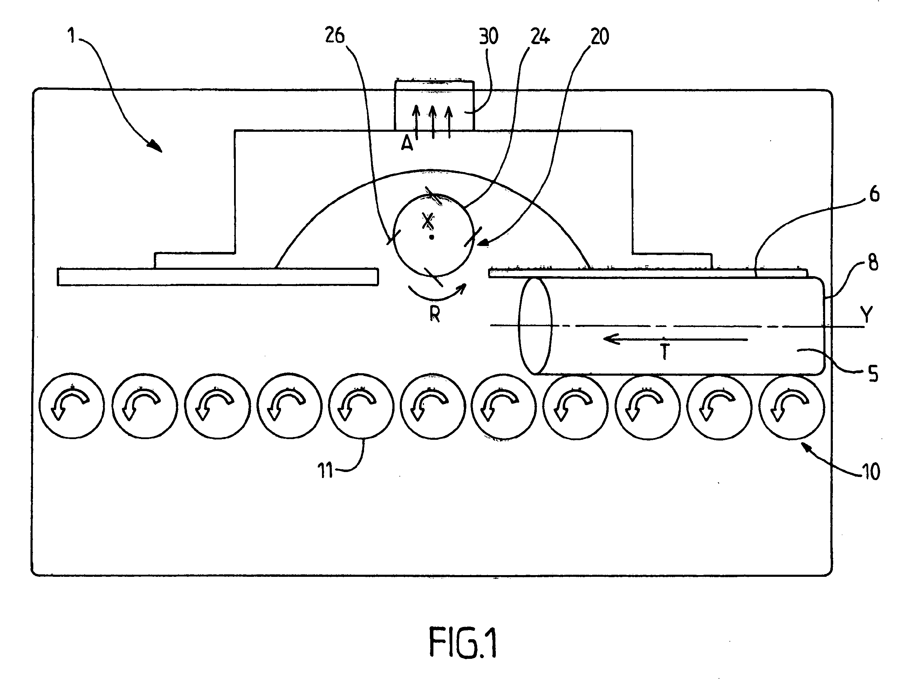

L'invention va maintenant être décrite plus en détail en référence à un mode de réalisation particulier donné à titre d'illustration uniquement et représentés la figure 1 qui est une vue de côté schématisée du procédé de fabrication conforme à la présente invention.

Selon l'invention, le procédé comprend tout d'abord les étapes suivantes déjà décrites en relation avec l'art antérieur connu :
- réaliser un pâton de pain de mie par pétrissage, façonnage, puis fermentation dans un moule,
- cuire le pâton dans le moule, puis laisser refroidir le pain de mie cuit,
- éliminer la croûte du pain de mie au moins sur ses faces latérales.

Plus spécifiquement, selon la présente invention, l'étape d'élimination de la croûte est réalisée par raclage de la surface périphérique 6 du pain de mie 5 à l'aide de moyens coupants rotatifs 20.

Ce raclage permet de « grignoter » ou ronger le pain de mie 5 pour en éliminer la croûte mais également pour lui donner une forme définitive indépendante de la forme initiale du pain avec croûte. De nombreuses formes différentes et attrayantes peuvent ainsi être réalisées facilement à la manière d'un usinage.

L'obtention de cette forme définitive se fait par l'utilisation d'une machine 1 comportant des moyens de transport 10 et des moyens d'élimination de la croûte, ces derniers se présentant sous la forme de moyens coupants rotatifs 20.

Lors de l'étape d'élimination de la croûte, le pain de mie 5 est mis en mouvement selon une direction de déplacement T tangentielle aux moyens coupants rotatifs 20, donc perpendiculaire à leur axe de rotation X, et à l'encontre de leur sens de rotation R.

Plus précisément, les moyens de transport 10 sont constitués par un entraîneur automatique comportant des rouleaux 12 d'axes parallèles déplaçant le pain de mie 5 devant les outils coupants rotatifs 20, soit uniquement vers l'avant, soit alternativement d'avant en arrière. Dans ce cas, le pain de mie 5 est déplacé plusieurs fois alternativement devant les moyens coupants 20 pour retirer la croûte sur toute sa périphérie. Le pain de mie peut également être pivoté sur son axe longitudinal Y pour éliminer la croûte sur ses quatre faces.

En variante de réalisation (non illustrée), le pain de mie 5 peut être déplacé simultanément ou successivement devant plusieurs moyens coupants rotatifs 20 disposés autour dudit pain pour éliminer toute la croûte sur plusieurs faces en même temps.

Les moyens coupants rotatifs 20 comprennent quant à eux des couteaux 26 montés sur un tambour rotatif 24 tournant à vitesse élevée, de l'ordre de 5 000 à 20 000 tours/min.

Bien entendu, pendant l'étape d'élimination de la croûte, les morceaux de cette dernière arrachés du pain de mie sont éliminés selon la flèche A, par exemple pas des moyens d'aspiration 30, de préférence au plus près des moyens coupants rotatifs 20.

Avant de passer sur les moyens de transport, et au moins durant l'étape d'élimination de la croûte, le pain de mie est congelé à une température en surface inférieure à environ -20°C de manière à conserver une croûte ferme en vue de son élimination. Cette opération peut par exemple être faite par cryogénie.

Après l'étape d'élimination de la croûte, les talons 8 sont retirés. Le pain de mie 5 est alors tranché, par exemple en durcissant localement sa surface par chauffage ou refroidissement afin de créer une couche superficiellement suffisamment dure pour que le pain ne s'affaisse pas, puis emballé

Ainsi, l'étape d'élimination de la croûte est également une étape de création de la forme finale du pain de mie, avec une forme longitudinale droite, courbe, symétrique ou non, et une section polygonale ou courbe, par exemple carrée, rectangulaire triangulaire, ronde, ovale, en coeur ou en étoile. Les formes complexes sont obtenues par les différents profils que peuvent avoir les couteaux et par passage successif devant plusieurs séries de couteaux.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, la congélation du pain de mie refroidit avant élimination de sa croûte peut également être réalisé par production de froid mécanique, de préférence ventilé.

Le pain de mie peut aussi être déplacé par pincement entre deux bandes mobiles, par une chaîne à taquet, ou par un bras pousseur à mouvement alternatif.

Les morceaux de croûte arrachés du pain de mie peuvent être évacués par un système à convoyeur à tapis simple, à godets ou à taquets.

Enfin, selon les ingrédients entrant dans la composition de la pâte ainsi que leurs proportions, notamment le sel, le sucre et les matières grasses, la température choisie pour refroidir le pain de mie avant/pendant l'étape d'élimination de la croûte peut être différente de -20° dès lors qu'elle reste sous -1°C.

## Revendications

1. Procédé de fabrication de pain de mie sans croûte, comprenant les étapes consistant à :
- réaliser un pâton de pain de mie (5) par pétrissage, façonnage, puis fermentation dans un moule,
- cuire le pâton dans le moule, puis laisser refroidir le pain de mie (5) cuit,
- éliminer la croûte du pain de mie (5) au moins sur ses faces latérales par raclage de la surface périphérique (6) du pain de mie (5) à l'aide de moyens coupants rotatifs (20),
**caractérisé en ce que** pendant l'étape d'élimination de la croûte, le pain de mie (5) est
- congelé à une température en surface inférieure à environ - 1°C, de préférence de l'ordre de -10°C à -30°C, de manière à conserver une croûte ferme en vue de son élimination,
- mis en mouvement selon une direction de déplacement (T) tangentielle aux moyens coupants rotatifs (20) et perpendiculaire à un axe de rotation (X) de ces derniers, à l'encontre du mouvement de rotation (R) d'outils tranchante (26) dont ils sont munis, et
- déplacé plusieurs fois alternativement devant les moyens coupants rotatifs (20) pour retirer la croûte sur toute sa périphérie.

2. Procédé selon la revendication 1, **caractérisé en ce que** la congélation du pain de mie (5) est réalisé par cryogénie.

3. Procédé selon la revendication 1, **caractérisé en ce que** la congélation du pain de mie (5) est réalisé par production de froid mécanique, de préférence ventilé.

4. Procédé selon l'une quelconque des revendications précédentes, **caractérisé en ce que** le pain de mie (5) est déplacé sur des rouleaux (12) formant un support de déplacement (10).

5. Procédé selon l'une quelconque des revendications 1 à 3, **caractérisé en ce que** le pain de mie (5) est déplacé par pincement entre deux bandes mobiles.

6. Procédé selon l'une quelconque des revendications 1 à 3, **caractérisé en ce que** le pain de mie (5) est déplacé par une chaîne à taquet.

7. Procédé selon l'une quelconque des revendications 1 à 3, **caractérisé en ce que** le pain de mie (5) est déplacé par un bras pousseur à mouvement alternatif.

8. Procédé selon l'une quelconque des revendications précédentes, **caractérisé en ce que** le pain de mie (5) est déplacé simultanément ou successivement devant plusieurs moyens coupants rotatifs (20) disposés autour dudit pain pour éliminer toute la croûte sur plusieurs faces en même temps.

9. Procédé selon l'une quelconque des revendications précédentes, **caractérisé en ce que**, pendant l'étape d'élimination de la croûte, les morceaux de cette dernière arrachés du pain de mie (5) sont aspirés, de préférence au plus près des moyens coupante rotatifs (20).

10. Procédé selon l'une quelconque des revendications 1 à 8, **caractérisé en ce que**, pendant l'étape d'élimination de la croûte, les morceaux de cette dernières arrachés du pain de mie (5) sont évacués par un système à convoyeur à tapis simple, à godets ou à taquets.

11. Procédé selon l'une quelconque des revendications précédentes, **caractérisé en ce que**, postérieurement à l'étape d'élimination de la croûte, les talons (8) sont retirés, le pain de mie (5) est tranché puis emballé.

12. Procécé selon l'une quelconque des revendications précédentes, **caractérisé en ce que** l'étape d'élimination de la croûte est également une étape de création de la forme finale du pain de mie (5), avec une forme longitudinale droite, courbe, symétrique ou non, et une section polygonale ou courbe, par exemple carrée, rectangulaire triangulaire, ronde, ovale, en coeur ou en étoile.

## Claims

1. Method for manufacturing sandwich bread with no crust, comprising the steps of:
- preparing a dough roll of sandwich bread (5) by kneading, shaping, then fermentation in a mould,
- baking the dough roll in the mould, then leaving the baked sandwich bread (5) to cool,
- removing the crust of the sandwich bread (5), at least from its lateral faces, by scraping the peripheral surface (6) of the sandwich bread (5) with the aid of rotary cutting means (20),
**characterized in that**, during the step of removing the crust, the sandwich bread (5) is
- frozen at a surface temperature of below approximately -1°C, preferably of the order of -10°C to -30°C, so as to preserve a firm crust for removal,
- set in motion in a direction of movement (T) tangential to the rotary cutting means (20) and perpendicular to an axis of rotation (X) of the latter, counter to the movement of rotation (R) of slicing tools (26) with which said means are equipped, and
- moved several times to and fro in front of the rotary cutting means (20) in order to remove the crust from the entire periphery.

2. Method according to Claim 1, **characterized in that** the freezing of the sandwich bread (5) is effected by cryogenics.

3. Method according to Claim 1, **characterized in that** the freezing of the sandwich bread (5) is effected by mechanical, preferably ventilated, cold production.

4. Method according to any of the preceding claims, **characterized in that** the sandwich bread (5) is moved on rollers (12) forming a moving support (10).

5. Method according to any of Claims 1 to 3, **characterized in that** the sandwich bread (5) is moved by being pinched between two mobile bands.

6. Method according to any of Claims 1 to 3, **characterized in that** the sandwich bread (5) is moved by a cleated chain.

7. Method according to any of Claims 1 to 3, **characterized in that** the sandwich bread (5) is moved by a pusher arm with a reciprocating movement.

8. Method according to any of the preceding claims, **characterized in that** the sandwich bread (5) is moved simultaneously or successively in front of several rotary cutting means (20) which are arranged around said bread in order to remove all the crust from several faces at the same time.

9. Method according to any of the preceding claims, **characterized in that**, during the step of removing the crust, the fragments thereof that are torn from the sandwich bread (5) are aspirated, preferably as close as possible to the rotary cutting means (20).

10. Method according to any of Claims 1 to 8, **characterized in that**, during the step of removing the crust, the fragments thereof that are torn from the sandwich bread (5) are evacuated by a conveyor system with a simple belt, with buckets or with cleats.

11. Method according to any of the preceding claims, **characterized in that**, after the step of removing the crust, the heels (8) are withdrawn, and the sandwich bread (5) is sliced and then packaged.

12. Method according to any of the preceding claims, **characterized in that** the step of removing the crust is also a step of creating the final shape of the sandwich bread (5), with a straight, curved, symmetric or asymmetric longitudinal shape, and with a polygonal or curved cross section, for example square, rectangular, triangular, round, oval, heart-shaped or star-shaped.

## Patentansprüche

1. Verfahren zur Herstellung von Toastbrot ohne Kruste, umfassend die folgenden Schritte, bestehend aus:
- Herstellen eines Toastbrotteigklumpens (5) durch Kneten, Formen und dann Fermentieren in einer Form,
- Backen des Klumpens in der Form, dann Abkühlen des gebackenen Toastbrotes (5),
- Beseitigen der Kruste des Toastbrotes (5) zumindest auf seinen Seitenflächen durch Abschaben der Außenfläche (6) des Brotes (5) mit Hilfe von rotierenden Schneidmitteln (20),
**dadurch gekennzeichnet, dass** während des Schrittes der Beseitigung der Kruste das Toastbrot (5)
- bei einer Oberflächentemperatur unter ungefähr -1°C, vorzugsweise von ungefähr -10°C bis -30°C, eingefroren wird, um eine feste Kruste im Hinblick auf deren Beseitigung zu bewahren,
- in eine Bewegungsrichtung (T), die tangential zu den rotierenden Schneidmitteln (20) und senkrecht zu der Drehachse (X) der letztgenannten zeigt, und gegen die Drehrichtung (R) von Trennmitteln (26), mit denen sie versehen sind, in Bewegung gesetzt wird, und
- mehrmals vor den rotierenden Schneidmitteln (20) bewegt wird, um die Kruste auf seiner gesamten Außenseite abzuheben.

2. Verfahren nach Anspruch 1, **dadurch gekennzeichnet, dass** das Einfrieren des Toastbrotes (5) durch Kryogenie erfolgt.

3. Verfahren nach Anspruch 1, **dadurch gekennzeichnet, dass** das Einfrieren des Toastbrotes (5) durch mechanische, vorzugsweise ventilierte, Kälteerzeugung erfolgt.

4. Verfahren nach einem der vorhergehenden Ansprüche, **dadurch gekennzeichnet, dass** das Toastbrot (5) auf Rollen (12) bewegt wird, die eine Bewegungsauflage (10) bilden.

5. Vorrichtung nach einem der Ansprüche 1 bis 3, **dadurch gekennzeichnet, dass** das Toastbrot (5) durch Einklemmen zwischen zwei Förderbändern bewegt wird.

6. Vorrichtung nach einem der Ansprüche 1 bis 3, **dadurch gekennzeichnet, dass** das Toastbrot (5) durch eine Mitnehmerkette bewegt wird.

7. Verfahren nach einem der Ansprüche 1 bis 3, **dadurch gekennzeichnet, dass** das Toastbrot (5) durch einen sich hin- und herbewegenden Schubarm bewegt wird.

8. Verfahren nach einem der vorhergehenden Ansprüche, **dadurch gekennzeichnet, dass** das Toastbrot (5) gleichzeitig oder nacheinander vor mehreren rotierenden Schneidmitteln (20) bewegt wird, die um das Brot herum angeordnet sind, um die gesamte Kruste auf mehreren Seiten gleichzeitig zu beseitigen.

9. Verfahren nach einem der vorhergehenden Ansprüche, **dadurch gekennzeichnet, dass** während des Schritts der Beseitigung der Kruste die Stücke der letztgenannten, die vom Toastbrot (5) abgerissen werden, vorzugsweise möglichst in der Nähe der rotierenden Schneidmittel (20) abgesaugt werden.

10. Verfahren nach einem der Ansprüche 1 bis 8, **dadurch gekennzeichnet, dass** während des Schritts der Beseitigung der Kruste die Stücke der letztgenannten, die vom Toastbrot (5) abgerissen werden, durch ein Fördersystem mit einfachem Förderband, Bechern oder Mitnehmern beseitigt werden.

11. Verfahren nach einem der vorhergehenden Ansprüche, **dadurch gekennzeichnet, dass** nach dem Schritt der Beseitigung der Kruste die Enden (8) abgenommen werden und das Toastbrot (5) geschnitten und verpackt wird.

12. Verfahren nach einem der vorhergehenden Ansprüche, **dadurch gekennzeichnet, dass** der Schritt der Beseitigung der Kruste auch ein Schritt der Herstellung der endgültigen Form des Toastbrotes (5) mit einer geraden, gekrümmten, symmetrischen oder nicht symmetrischen länglichen Form und einem polygonalen oder gekrümmten Querschnitt, beispielsweise quadratisch, rechteckig, dreieckig, rund, oval, herz- oder sternförmig ist.
